# EUROPÄISCHE PATENTSCHRIFT

(11) **EP 3 008 530 B1**
(45) Veröffentlichungstag und Bekanntmachung des Hinweises auf die Patenterteilung: **14.11.2018**
(21) Anmeldenummer: 14726334.7
(22) Anmeldetag: 19.05.2014
(51) Int. Cl.: G05B 19/042

(54) **VERFAHREN ZUR OFFLINE-PARAMETRIERUNG EINES FELDGERÄTES ÜBER EINE FUNKSCHNITTSTELLE**
METHOD FOR PARAMETERIZING A FIELD DEVICE
PROCÉDÉ SERVANT À PARAMÉTRER UN APPAREIL DE TERRAIN

(30) Priorität: 12.06.2013 DE 102013106098
(43) Veröffentlichungstag der Anmeldung: 20.04.2016
(73) Patentinhaber: Endress+Hauser SE+Co. KG, 79689 Maulburg (DE)
(72) Erfinder: SCHÄUBLE, Harald, 79541 Lörrach (DE); DONKERS, Niels, 2561 TM Den Haag (NL)
(74) Vertreter: Andres, Angelika Maria
(86) Internationale Anmeldenummer: PCT/EP2014/060187
(87) Internationale Veröffentlichungsnummer: WO 2014/198491

(56) Entgegenhaltungen:
- EP-A1- 1 293 853
- EP-A1- 1 862 877
- WO-A1-2011/054618

## Beschreibung

Die Erfindung bezieht sich auf ein Verfahren zur Parametrierung eines Feldgerätes der Automatisierungstechnik mittels eines Bediengerätes.
Ferner bezieht sich die Erfindung auf ein Feldgerät der Automatisierungstechnik, sowie ein Bediengerät zur Parametrierung eines solchen Feldgerätes.
In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und
Temperaturmessgeräte etc.. Hierbei erfassen Sensoren die entsprechenden Prozessvariablen, wie bspw. Füllstand, Durchfluss, Druck und/oder Temperatur.
Zur Beeinflussung von Prozessvariablen dienen Aktoren, z. B. Ventile oder Pumpen, über die z. B. der Durchfluss einer Flüssigkeit in einem Rohrleitungsabschnitt bzw. der Füllstand in einem Behälter geändert werden kann.
Als Feldgeräte werden im Prinzip alle Geräte bezeichnet, die prozessnah eingesetzt werden und die prozessrelevante Informationen liefern oder verarbeiten.
Eine Vielzahl solcher Feldgeräte wird von der Firma Endress + Hauser hergestellt und vertrieben.
Bekannt sind Feldgeräte, die über eine 4..20 mA Stromschnittstelle bzw. Zweidrahtleitung in eine Automatisierungsanlage eingebunden sind. Durch die Einbindung wird das Feldgerät mit Energie versorgt und kann Messwerte oder auch Stellwerte mit dem Leitsystem austauschen.

Neben derartigen Feldgeräten gibt es auch so genannte Vier-Draht-Feldgeräte die aufgrund ihres höheren Energiebedarfes über zwei separate EnergieversorgungsLeitungen in die Automatisierungsanlage eingebunden sind.

Dieser Zustand, also, dass das Feldgerät über die Zweidrahtleitung oder auch eine Vier-Draht-Leitung mit Energie versorgt wird, soll nachfolgend als "Online" bezeichnet werden. Im Gegensatz dazu soll der Zustand, bei dem ein Feldgerät nicht an eine Zweidrahtleitung angebunden ist und folglich auch nicht mit Energie über diese versorgt werden kann, als "Offline" bezeichnet werden. Es versteht sich von selbst, dass ein Feldgerät, weiches "Offline" ist auch keine Messwerte oder Stellwerte mit dem Leitsystem austauscht.

Ferner ist aus dem Stand der Technik die Europäische Patentanmeldung EP 1 862 877 A1 bekannt geworden, die sich auf ein industrielles Kontrollsystem (engl. industrial control system) und ein entsprechendes Feldgerät, welches dazu eingerichtet ist, drahtlos Sekundärsignale zu senden bzw. zu empfangen, bezieht.

Ebenfalls sind aus dem Stand der Technik die Europäische Patentanmeldung EP 1 293 853 A1, die sich auf ein Funkmodul für ein Feldgerät bezieht und die internationale Patentanmeldung WO 2011/054618 A1, die sich auf ein Verfahren zur Integration eines Feldgerätes in ein Funknetzwerk bezieht, bekannt geworden.

Ebenfalls bekannt ist, dass die Arbeitsweise eines Feldgeräts mit Hilfe von Parametern festgelegt wird, die in hierfür vorgesehene Module bzw. spezifische Speicherstellen des Feldgeräts geschrieben werden. Durch das Speichern von geeigneten Parameterwerten in den jeweiligen Modulen bzw. Speicherstellen wird die Arbeitsweise des Feldgeräts festgelegt. Dieser Vorgang wird als "Parametrieren bzw. Parametrierung" bezeichnet. Die Festlegung der Parameter wird beispielsweise vom Kunden durchgeführt. Durch die Auswahl geeigneter Parameterwerte kann der Kunde das Feldgerät an seine jeweilige Applikation anpassen. Derartige Parameter sind beispielsweise im Falle eines Füllstandsmessgerätes, welches den Füllstand eines Mediums in einem Tank messen soll, die Höhe oder auch der Durchmesser des Tankes.

Die Parametrierung derartiger Feldgeräte findet dabei heutzutage im "Online" Zustand des Feldgerätes statt. Hierzu wird zuerst das Feldgerät physikalisch an die Zweidrahtleitung angeschlossen und anschließend wird das Feldgerät mittels eines Bediengerätes parametriert.

Dieses Vorgehen weist den Nachteil auf, dass sich ein Servicetechniker für die gesamte Parametrierung an dem für ihn möglicherweise ungünstigen Einbauort des Feldgerätes, an dem das Feldgerät zur Energieversorgung mittels der Zweidrahtleitung angebunden ist, befinden muss.

Der Erfindung liegt die Aufgabe zugrunde, ein Verfahren vorzuschlagen, dass die einfachere Parametrierung eines Feldgerätes durch einen Bediener ermöglicht.

Die Aufgabe wird durch das Verfahren gelöst, das in Anspruch 1 beschrieben ist. Desweitern wird ein Feldgerät beschrieben, welches zur Durchführung des Verfahrens geeignet ist.

Die Aufgabe wird erfindungsgemäß durch ein Verfahren zum Parametrieren eines Feldgerätes der Automatisierungstechnik mittels eines Bediengerätes gelöst, wobei das Feldgerät zumindest eine Batterie, ein Funkmodul und einen nicht-flüchtigen-Speicher umfasst, wobei die Batterie das Funkmodul und den nicht-flüchtigen Speicher, in dem Parameter des Feldgerätes gespeichert werden, in einem Offline-Zustand mit Energie versorgt, wobei in dem Offline-Zustand das Feldgerät nicht an eine Zweidrahtleitung angebunden ist und nicht mit Energie über die Zweidrahtleitung versorgt wird, und wobei das Verfahren folgende Schritte aufweist:
- Aufbau einer drahtlosen Verbindung zwischen dem Bediengerät und dem batteriebetriebenen Funkmodul des Feldgerätes, wobei das Feldgerät im Offline-Zustand betrieben wird;
- Schreiben von Parametern in den nicht-flüchtigen Speicher des Feldgerätes, um so eine Vorparametrierung des Feldgerätes im Offline-Zustand durchzuführen;
- Abbau der drahtlosen Verbindung zwischen dem Bediengerät und dem batteriebetriebenen Funkmodul des Feldgerätes im Offline-Zustand;
- Anbindung des vorparametrierten Feldgerätes an die Zweidrahtleitung zur Energieversorgung des Feldgerätes;
- Parametrierung des Feldgerätes nach dem dieses an die Zweidrahtleitung angebunden wurde, wobei zur Parametrierung zumindest auf die im nicht-flüchtigen Speicher gespeicherten Parameter zurückgegriffen wird.

Erfindungsgemäß wird die einfachere Parametrierung dadurch erreicht, dass das Feldgerät ein Funkmodul aufweist, welches bspw. gemäß dem Bluetooth-low-energy Protokoll arbeitet, wobei das Funkmodul über eine Batterie auch in dem Fall mit Energie versorgt wird, dass das Feldgerät sich im "offline" Modus befindet, also keine Energie über die Zweidrahtleitung bekommt. Hierdurch kann eine Vorparametrierung des Feldgerätes mittels Parametern die zu diesem Zeitpunkt bereits festgelegt sind bzw. feststehen, außerhalb des vorgesehenen Einbauortes des Feldgerätes stattfinden. Hierzu werden die Parameter in einen nicht-flüchtigen Speicher des Feldgerätes geschrieben, der ebenfalls mittels der Batterie im Offline Zustand mit Energie versorgt wird.

Anschließend wird das vorparametrierte Feldgerät an die Zweidrahtleitung angebunden und das Feldgerät führt eine "vollständige" Parametrierung durch, in dem es auf die Parameter des nicht-flüchtigen Speichers zugreift und die Parameter entsprechend ihrer Zugehörigkeit in die vorgesehenen Module bzw. spezifischen Speicherstellen des Feldgeräts schreibt.

Gemäß einer vorteilhaften Ausführungsform wird über einen Schalter die Energieversorgung zumindest des Funkmoduls durch die Batterie aktiviert. Auf diese Weise lässt sich die Entladedauer und somit die Standzeit der Batterie erhöhen, da das Funkmodul nicht kontinuierlich, sondern bedarfsabhängig bzw. spezifisch mit Energie versorgt wird.

Gemäß einer weiteren vorteilhaften Ausführungsform wird mit einem in das Funkmodul integrierten Mikroprozessor die Übertragung der Parameter zwischen dem Funkmodul und dem nicht-flüchtigen-Speicher durchgeführt. Funkmodule mit einem integrierten Mikroprozessor erlauben eine besonders einfache Realisierung der Übertragung der Parameter zwischen dem Funkmodul und dem nicht-flüchtigen-Speicher.

Gemäß einer alternativen vorteilhaften Ausführungsform weist das Feldgerät einen außerhalb des Funkmoduls angeordneten Mikroprozessor auf, mit dem die Übertragung der Parameter zwischen dem Funkmodul und dem nicht-flüchtigen-Speicher durchgeführt wird. Eine derartige Realisierung der Übertragung der Parameter zwischen dem Funkmodul und dem nicht-flüchtigen-Speicher bietet den Vorteil, dass der Energieverbrauch der Batterie weiter reduziert werden kann, da ein Mikroprozessor eingesetzt werden kann, der noch weniger Energie aufnimmt, als bspw. ein in das Funkmodul integrierter Mikroprozessor dies tut.

Gemäß einer weiteren vorteilhaften Ausführungsform wird das Funkmodul nach der Anbindung des Feldgerätes an die Zweidrahtleitung über diese mit Energie versorgt, wobei weitere Parametrierungen des Feldgerätes mittels des Funkmoduls durchgeführt werden.

Gemäß einer weiteren vorteilhaften Ausführungsform wird die drahtlose Verbindung mittels des Funkmoduls gemäß dem Bluetooth-Low-Energy oder dem ANT+ oder dem WLAN Protokoll durchgeführt.

Gemäß einer alternativen Ausführungsform wird die drahtlose Verbindung mittels des Funkmoduls gemäß einem proprietären Funkprotokoll durchgeführt.

Ferner wird ein Feldgerät der Automatisierungstechnik beschrieben, welches zur Durchführung des Verfahrens nach einem der vorherigen Ausführungsformen geeignet ist, wobei das Feldgerät zumindest ein Funkmodul, eine Batterie und einen nicht-flüchtigen Speicher aufweist, wobei die Batterie das Funkmodule und den nicht-flüchtigen Speicher mit Energie versorgt, wenn sich das Feldgerät im offline Zustand befindet. Auf diese Weise kann eine Offline-Parametrierung des Feldgerätes durchgeführt werden.

Die Erfindung wird anhand der nachfolgenden Zeichnungen näher erläutert. Es zeigt:
Fig. 1: eine schematische Darstellung einer ersten Ausgestaltung eines Feldgerätes sowie eines Bediengerätes, die zur Durchführung des erfindungsgemäßen Verfahrens geeignet sind,
Fig. 2: eine alternative schematische Darstellung eines Feldgerätes sowie eines Bediengerätes, die zur Durchführung des erfindungsgemäßen Verfahrens geeignet sind.

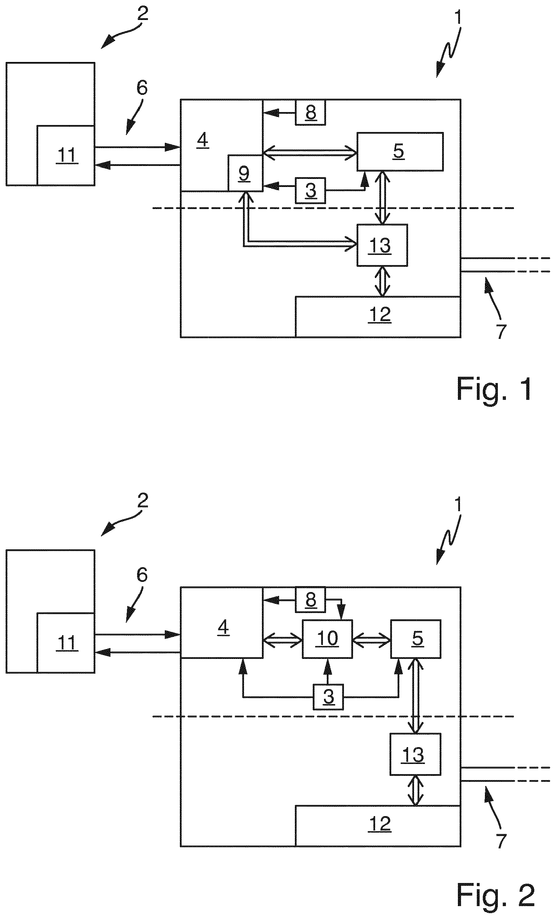

Figur 1 zeigt eine schematische Darstellung eines Feldgerätes 1 sowie eines Bediengerätes 2, die zur Durchführung des erfindungsgemäßen Verfahrens geeignet sind.

Das Feldgerät 1 umfasst hierbei eine Batterie 3, ein Funkmodul 4, bspw. ein Bluetooth Low Energy (Abkürzung: BLE) Modul und einen nicht-flüchtigen Speicher 5, in dem Parameter die dem Feldgerät 1 bei der Offline Parametrierung zugeführt werden, gespeichert sind.

Die Batterie 3 ist derartig in das Feldgerät 1 eingebaut, dass sie das Funkmodul 4 und den nicht-flüchtigen Speicher 5 mit Energie versorgt, auch wenn das Feldgerät 1 nicht an eine Zweidrahtleitung 7 angeschlossen ist, also sich im Offline Zustand befindet. Mittels eines Schalters 8 kann das Funkmodul 4 aktiviert bzw. deaktiviert werden. Somit lässt sich die Energieversorgung des Funkmodules 4 durch die Batterie 3 auf den Zeitraum der Offline Parametrierung beschränken. Auf diese Weise lässt sich die Entladezeit bzw. Standzeit der Batterie 3 erhöhen. Die Batterie 3 versorgt neben dem Funkmodul 4 auch den nicht-flüchtigen Speicher 5 des Feldgerätes.

Der nicht-flüchtigen Speicher 5 dient dazu, Parameter die während der Offline Parametrierung des Feldgerätes übertragen werden zu speichern, so dass die Parameter nach der Anbindung des Feldgerätes 1 an die Zweidrahtleitung 7 und der damit einhergehenden vollständigen Energieversorgung des Feldgerätes 1 zur Verfügung stehen.
Durch das Anschließen bzw. Anbinden des Feldgerätes 1 an die Zweidrahtleitung 7 werden weitere Module 12, 13 des Feldgerätes 1, wie beispielsweise ein Hauptprozessor 13 und/oder auch ein Sensor/Aktor-Modul 12 mit Energie versorgt, die im Offline Zustand des Feldgerätes 1 nicht mit Energie durch die Batterie 3 versorgt werden.

Fig. 2 zeigt eine alternative schematische Darstellung eines Feldgerätes 1 sowie eines Bediengerätes 2, die zur Durchführung des erfindungsgemäßen Verfahrens geeignet sind. Hierbei weist das Funkmodul 4 des Feldgerätes 1 keinen integrierten Mikroprozessor 9 auf, sondern einen außerhalb des Funkmoduls 4 angeordneten Mikroprozessor 10, der die Übertragung der Parameter zwischen dem Funkmodul 4 und dem nicht-flüchtigen-Speicher 5 durchführt.

Ferner zeigen sowohl Fig. 1 als auch Fig. 2 ein Bediengerät 2, welches ein zu dem Funkmodul 4 des Feldgerätes 1 kompatibles Funkmodul 11 aufweist, das je nach Ausgestaltung des Funkmoduls 4 des Feldgerätes 1 nach dem Bluetooth-Low-Energy- oder dem ANT+- oder dem WLAN-Protokoll oder einem proprietären Funkprotokoll arbeitet. Ein derartiges Bediengerät kann bspw. ein Smartphone, Mobiltelefon, Laptop, Tablet-PC, PDA, Netbook, etc. darstellen.

Im Folgenden wird auf das erfindungsgemäße Verfahren eingegangen. Dieses unterteilt sich im Prinzip in zwei Parametrierschritte, einen ersten Offline Parametrierschritt, in dem Teile das Feldgerät 1 ausschließlich durch die Batterie 3 mit Energie versorgt werden und einen zweiten Online Parametrierschritt, in dem das Feldgerät 1 vollständig mit Energie über die Zweidrahtleitung 7 gespeist wird und mit den Parametern, die bei der Offline Parametrierung im nicht-flüchtigen Speicher 5 hinterlegt wurden, parametriert wird.

Die Offline Parametrierung weist dabei folgende Schritte auf:
- Aufbau einer drahtlosen Verbindung 6 zwischen einem Bediengerät 2 und dem batteriebetriebenen Funkmodul 4 des Feldgerätes, wobei das Feldgerät 1 offline betrieben wird;
- Lesen und/oder Schreiben der in dem nicht-flüchtigen Speicher 5 gespeicherten Parameter des Feldgerätes 1;
- Abbau der drahtlosen Verbindung 6 zwischen dem Bediengerät 2 und dem batteriebetriebenen Funkmodul 4 des Feldgerätes 1.

Dieser erste Offline Parametrierschritt muss nicht zwingend an dem vorgesehenen Einsatzort des Feldgerätes 1 stattfinden, sondern kann bspw. auch an einem Ort außerhalb der Automatisierungsanlage stattfinden. Auf diese Weise lässt sich auf besonders einfache Weise die Parametrierung des Feldgerätes 1 durch einen Bediener durchführen.

Anschließend wird das vorparametrierte Feldgerät 1 an eine Zweidrahtleitung 7 der Automatisierungsanlage angebunden bzw. angeschlossen und somit auch vollständig, d.h. alle dem Feldgerät 1 zugehörigen Module 4, 5, 8, 9, 10, 12, 13 mit Energie gespeist.

Die folgende Online Parametrierung sieht vor, dass das Feldgeräte 1 nach dem dieses an die Zweidrahtleitung 7 angebunden wurde, zumindest auf die im nicht-flüchtigen Speicher 5 hinterlegten Parameter zurückgreift, umso die Parametrierung aller dem Feldgerät 1 zugehörigen Module 4, 5, 8, 9, 10, 12, 13 durchzuführen. Denkbar an dieser Stelle ist auch, dass während der Online Parametrierung neben dem im nicht-flüchtigen Speicher 5 hinterlegten Parametern auch weitere Parameter über ein Bediengerät 2 dem Feldgerät 1 zu dessen Parametrierung zugeführt werden. Dies kann beispielsweise wiederum über das Funkmodul 4 des Feldgerätes 1 mittels eines entsprechend ausgebildeten Bediengerätes 2 durchgeführt werden, wobei in dem Fall das Funkmodul des Feldgerätes über die Zweidrahtleitung 7 und nicht mittels der Batterie 3 mit Energie versorgt wird.

### Bezugszeichenliste

- 1: Feldgerät
- 2: Bediengerät
- 3: Batterie
- 4: Funkmodul des Feldgerätes
- 5: Nicht-flüchtiger Speicher
- 6: Drahtlose Verbindung
- 7: Zweidrahtleitung
- 8: Schalter
- 9: Integrierter Mikroprozessor
- 10: Mikroprozessor
- 11: Funkmodul des Bediengerätes
- 12: Sensorik/Aktorik-Modul
- 13: Hauptprozessor

## Patentansprüche

1. Verfahren zum Parametrieren eines Feldgerätes (1) der Automatisierungstechnik mittels eines Bediengerätes (2), wobei das Feldgerät (1) zumindest eine Batterie (3), ein Funkmodul (4) und einen nicht-flüchtigen-Speicher (5) umfasst, wobei die Batterie (3) das Funkmodul (4) und den nicht-flüchtigen Speicher (5), in dem Parameter des Feldgerätes (1) gespeichert werden, in einem Offline-Zustand mit Energie versorgt, wobei in dem Offline-Zustand das Feldgerät nicht an eine Zweidrahtleitung angebunden ist und nicht mit Energie über die Zweidrahtleitung versorgt wird, wobei das Verfahren folgende Schritte aufweist:
- Aufbau einer drahtlosen Verbindung (6) zwischen dem Bediengerät (2) und dem batteriebetriebenen Funkmodul (4) des Feldgerätes, wobei das Feldgerät (1) im Offline-Zustand betrieben wird;
- Schreiben von Parametern in den nicht-flüchtigen Speicher (5) des Feldgerätes (1), um so eine Vorparametrierung des Feldgerätes im Offline-Zustand durchzuführen;
- Abbau der drahtlosen Verbindung (6) zwischen dem Bediengerät (2) und dem batteriebetriebenen Funkmodul (4) des Feldgerätes (1) im Offline-Zustand;
- Anbindung des vorparametrierten Feldgerätes (1) an die Zweidrahtleitung (7) zur Energieversorgung des Feldgerätes (1);
- Parametrierung des Feldgerätes (1) nach dem dieses an die Zweidrahtleitung (7) angebunden wurde, wobei zur Parametrierung zumindest auf die im nicht-flüchtigen Speicher (5) gespeicherten Parameter zurückgegriffen wird.

2. Verfahren nach Anspruch 1, wobei über einen Schalter (8) vor dem Aufbau der drahtlosen Verbindung die Energieversorgung des Funkmoduls (4) durch die Batterie (3) aktiviert wird.

3. Verfahren nach Anspruch 1 oder 2, wobei mit einem in das Funkmodul integrierten Mikroprozessor (9) die Übertragung der Parameter zwischen dem Funkmodul (4) und dem nicht-flüchtigen-Speicher (5) durchgeführt wird.

4. Verfahren nach Anspruch 1 oder 2, wobei das Feldgerät (1) einen außerhalb des Funkmoduls (4) angeordneten Mikroprozessor (10) aufweist mit dem die Übertragung der Parameter zwischen dem Funkmodul (4) und dem nicht-flüchtigen-Speicher (5) durchgeführt wird.

5. Verfahren nach einem oder mehreren der vorhergehenden Ansprüche, wobei das Funkmodul (4) während der Anbindung des Feldgerätes (1) an die Zweidrahtleitung (7) über diese mit Energie versorgt wird und wobei weitere Parametrierungen des Feldgerätes (1) mittels des Funkmoduls (4) durchgeführt werden.

6. Verfahren nach einem oder mehreren der vorhergehenden Ansprüche, wobei die drahtlose Verbindung (6) mittels des Funkmoduls (4) gemäß dem Bluetooth-Low-Energy oder dem ANT+ oder dem WLAN Protokoll durchgeführt wird.

7. Verfahren nach einem oder mehreren der Ansprüche 1 bis 5, wobei die drahtlose Verbindung (6) mittels des Funkmoduls (4) gemäß einem proprietären Funkprotokoll durchgeführt wird.

8. Verfahren nach einem oder mehreren der vorhergehenden Ansprüche, wobei während das Feldgerät (1) offline betrieben wird, die in dem nicht-flüchtigen Speicher (5) gespeicherten Parameter gelesen werden.

9. Feldgerät der Automatisierungstechnik, das dazu eingerichtet ist, ein Verfahren nach Anspruch 1 zum Parametrieren des Feldgerätes (1) mittels eines Bediengeräts (2) auszuführen, wobei das Feldgerät (1) zumindest ein Funkmodul (4), eine Batterie (3) und einen nicht-flüchtigen Speicher (5) aufweist, wobei die Batterie (3) das Funkmodul (4) und den nicht-flüchtigen Speicher (5), in dem Parameter des Feldgerätes (1) speicherbar sind, in dem Offline-Zustand mit Energie versorgt, wobei in dem Offline-Zustand das Feldgerät (1) nicht an die Zweidrahtleitung (7) angebunden ist und nicht mit Energie über die Zweidrahtleitung (7) versorgt ist, wobei das Feldgerät dazu eingerichtet ist:
- in dem Offline-Zustand die drahtlose Verbindung (6) zwischen dem Bediengerät (2) und dem batteriebetriebenen Funkmodul (4) aufzubauen;
- in dem Offline-Zustand die Parameter in den nicht-flüchtigen Speicher (5) zu schreiben, um so eine Vorparametrierung des Feldgerätes (1) im Offline-Zustand durchzuführen;
- in dem Offline-Zustand die drahtlose Verbindung (6) zwischen dem Bediengerät (2) und dem batteriebetriebenen Funkmodul (4) abzubauen; und
- nach dem das Feldgerät (1) an die Zweidrahtleitung (7) angebunden wurde, zumindest auf die im nicht-flüchtigen Speicher (5) gespeicherten Parameter zurückzugreifen, um die Parametrierung des Feldgerätes (1) durchzuführen.

## Claims

1. Procedure designed for the parameterization of a field device (1) used in automation technology using an operating unit (2), wherein the field device (1) has at least a battery (3), a radio module (4) and a non-volatile memory (5), wherein the battery (3) supplies energy, in an offline mode, to the radio module (4) and the non-volatile memory (5) in which parameters of the field device (1) are saved, wherein, in the offline mode, the field device is not connected to a two-wire line and is not supplied with energy via the two-wire line, wherein the procedure comprises the following steps:
- Establishment of a wireless connection (6) between the operating unit (2) and the battery-powered radio module (4) of the field device, wherein the field device (1) is operated in the offline mode;
- Writing of parameters to the non-volatile memory (5) of the field device (1) in order to perform a pre-parameterization of the field device in the offline mode;
- Tearing down of the wireless connection (6) between the operating unit (2) and the battery-power radio module (4) of the field device (1) in the offline mode;
- Connection of the pre-parameterized field device (1) to the two-wire line (7) for the purpose of supplying power to the field device (1);
- Parameterization of the field device (1) after said field device has been connected to the two-wire line (7), wherein at the very least the parameters saved in the non-volatile memory (5) are used for the purpose of parameterization.

2. Procedure as claimed in Claim 1, wherein the supply of energy to the radio module (4) by the battery (3) is activated via a switch (8) before the wireless connection is established.

3. Procedure as claimed in Claim 1 or 2, wherein the transmission of the parameters between the radio module (4) and the non-volatile memory (5) is implemented by means of a microprocessor (9) built into the radio module (4).

4. Procedure as claimed in Claim 1 or 2, wherein the field device (1) has a microprocessor (10) arranged outside the radio module (4), said microprocessor being used to transmit the parameters between the radio module (4) and the non-volatile memory (5).

5. Procedure as claimed in one or more of the previous claims, wherein the radio module (4) is supplied with energy via the two-wire line (7) while the field device (1) is being connected to the field device (1), and wherein additional parameterizations of the field device (1) are performed by means of the radio module (4).

6. Procedure as claimed in one or more of the previous claims, wherein the wireless connection (6) is implemented using the radio module (4) in accordance with the Bluetooth Low Energy, ANT+ or WLAN protocol.

7. Procedure as claimed in one or more of the Claims 1 to 5, wherein the wireless connection (6) is implemented by means of the radio module (4) in accordance with a proprietary radio protocol.

8. Procedure as claimed in one or more of the previous claims, wherein, while the field device (1) is being operated offline, the parameters saved in the non-volatile memory (5) are read.

9. Field device used in automation technology which is configured to carry out a procedure as claimed in Claim 1 to parameterize the field device (1) using an operating unit (1), wherein the field device (1) has at least a radio module (4), a battery (3) and a non-volatile memory (5), wherein the battery (3) supplies energy, in an offline mode, to the radio module (4) and the non-volatile memory (5) in which parameters of the field device (1) can be saved, wherein, in the offline mode, the field device (1) is not connected to the two-wire line (7) and is not supplied with energy via the two-wire line (7), wherein the field device is configured to:
- Establish in the offline mode the wireless connection (6) between the operating unit (2) and the battery-powered radio module (4);
- Write, in the offline mode, the parameters to the non-volatile memory (5) in order to perform a pre-parameterization of the field device (1) in the offline mode;
- Tear down, in the offline mode, the wireless connection (6) between the operating unit (2) and the battery-powered radio module (4); and
- After the field device (1) has been connected to the two-wire line (7), to access at least the parameters saved in the non-volatile memory (5) in order to perform the parameterization of the field device (1).

## Revendications

1. Procédé destiné au paramétrage d'un appareil de terrain (1) de la technique d'automatisation au moyen d'un appareil de commande (2), pour lequel l'appareil de terrain (1) comporte au moins une batterie (3), un module radio (4) et une mémoire non volatile (5), la batterie (3) alimentant en énergie, dans un état hors ligne, le module radio (4) et la mémoire non volatile (5), mémoire dans laquelle sont enregistrés les paramètres de l'appareil de terrain (1), l'appareil de terrain n'étant pas relié, dans l'état hors ligne, à un câble bifilaire et n'étant pas alimenté en énergie par l'intermédiaire du câble bifilaire,
lequel procédé comprend les étapes suivantes :
- Établissement d'une liaison sans fil (6) entre l'appareil de commande (2) et le module radio (4) alimenté par batterie de l'appareil de terrain, l'appareil de terrain (1) étant utilisé dans l'état hors ligne ;
- Ecriture des paramètres dans la mémoire non volatile (5) de l'appareil de terrain (1), afin d'effectuer ainsi un préparamétrage de l'appareil de terrain dans l'état hors ligne ;
- Désactivation de la liaison sans fil (6) entre l'appareil de commande (2) et le module radio (4) alimenté par batterie de l'appareil de terrain (1) dans l'état hors ligne ;
- Connexion de l'appareil de terrain (1) préparamétré au câble bifilaire (7) pour l'alimentation en énergie de l'appareil de terrain (1) ;
- Paramétrage de l'appareil de terrain (1) après que celui-ci ait été connecté au câble bifilaire (7), paramétrage pour lequel il est fait appel au moins aux paramètres enregistrés dans la mémoire non volatile (5).

2. Procédé selon la revendication 1, pour lequel l'alimentation en énergie du module radio (4) par la batterie (3) est activée par l'intermédiaire d'un interrupteur (8), avant l'établissement de la liaison sans fil.

3. Procédé selon la revendication 1 ou 2, pour lequel la transmission des paramètres entre le module radio (4) et la mémoire non volatile (5) est réalisée au moyen d'un microprocesseur (9) intégré dans le module radio (4).

4. Procédé selon la revendication 1 ou 2, pour lequel l'appareil de terrain (1) comporte un microprocesseur (10) disposé à l'extérieur du module radio (4), microprocesseur au moyen duquel est réalisée la transmission des paramètres entre le module radio (4) et la mémoire non volatile (5).

5. Procédé selon l'une ou plusieurs des revendications précédentes, pour lequel le module radio (4) est, pendant la connexion de l'appareil de terrain (1) au câble bifilaire (7), alimenté en énergie via ce dernier, et pour lequel d'autres paramétrages de l'appareil de terrain (1) sont effectués au moyen du module radio (4).

6. Procédé selon l'une ou plusieurs des revendications précédentes, pour lequel la liaison sans fil (6) est réalisée au moyen du module radio (4) conformément au protocole Bluetooth Low Energy, protocole ANT+ ou protocole WLAN.

7. Procédé selon l'une ou plusieurs des revendications 1 à 5, pour lequel la liaison sans fil (6) est réalisée au moyen du module radio (4) conformément à un protocole radio propriétaire.

8. Procédé selon l'une ou plusieurs des revendications précédentes, pour lequel les paramètres enregistrés dans la mémoire non volatile (5) sont lus pendant que l'appareil de terrain (1) est utilisé hors ligne.

9. Appareil de terrain de la technique d'automatisation, lequel est configuré de telle sorte à exécuter un procédé selon la revendication 1 pour le paramétrage de l'appareil de terrain (1) au moyen d'un appareil de commande, l'appareil de terrain (1) comportant au moins un module radio (4), une batterie (3) et une mémoire non volatile (5), la batterie (3) alimentant en énergie, dans l'état hors ligne, le module radio (4) et la mémoire non volatile (5), mémoire dans laquelle les paramètres de l'appareil de terrain (1) peuvent être enregistrés, l'appareil de terrain (1) n'étant pas relié, dans l'état hors ligne, au câble bifilaire (7) et n'étant pas alimenté en énergie par l'intermédiaire du câble bifilaire (7),
l'appareil de terrain étant configuré de telle sorte :
- à établir, dans l'état hors ligne, la liaison sans fil (6) entre l'appareil de commande (2) et le module radio (4) alimenté par batterie ;
- à écrire, dans l'état hors ligne, les paramètres dans la mémoire non volatile (5), afin d'effectuer ainsi un préparamétrage de l'appareil de terrain (1) dans l'état hors ligne ;
- à désactiver, dans l'état hors ligne, la liaison sans fil (6) entre l'appareil de commande (2) et le module radio (4) alimenté par batterie ; et
- après que l'appareil de terrain ait été connecté au câble bifilaire (7), à recourir au moins aux paramètres enregistrés dans la mémoire non volatile (5), afin d'effectuer le paramétrage de l'appareil de terrain (1).
